# EUROPEAN PATENT SPECIFICATION

(11) **EP 1 201 518 B1**
(45) Date of publication and mention of the grant of the patent: **04.02.2004**
(21) Application number: 01124321.9
(22) Date of filing: 19.10.2001
(51) Int. Cl.: B60S 5/04

(54) **Rapid tyre inflation plant**
Vorrichtung zum schnellen Aufpumpen von Reifen
Dispositif pour le gonflage rapide de pneumatiques

(30) Priority: 30.10.2000 IT VR000108
(43) Date of publication of application: 02.05.2002
(73) Proprietor: BUTLER ENGINEERING & MARKETING S.r.l., 42010 Rio Saliceto (Reggio Emilia) (IT)
(72) Inventor: Gonzaga, Tullio, 42015 Correggio (Reggio Emilia) (IT)
(74) Representative: Reniero, Cirillo Silvano

(56) References cited:
- EP-A- 1 072 489
- WO-A-01/70521
- DE-A- 3 811 648
- US-A- 6 067 850
- PATENT ABSTRACTS OF JAPAN vol. 1995, no. 08, 29 September 1995 (1995-09-29) -& JP 07 127571 A (CHUGOKU YUKI SERVICE:KK), 16 May 1995 (1995-05-16)

## Description

The present invention regards a rapid tyre inflation plant.

Generally speaking tyres are currently inflated using an inflation device (an inflation pistol provided with manometer), connected to a distribution network of compressed air. Inflation occurs by inserting air through a check valve for tyres that, as is well known, has a relatively small section for the passage of air, usually of about 3 mm².

Given the available pressure gradient in normal compressed air distribution networks (with a maximum of 10 bar) and such a small section for air passage, the time taken to fully inflate a tyre is about 50 seconds for a car and ten minutes or more in the case of a road truck. In order to shorten the inflation times it has already been suggested to first dismantle the inner part of the check valve and then to reassemble it after inflation. With such an expedient the time taken to fill the tyre can be reduced to about 5 minutes but it is a very laborious process and in some cases may prejudice the proper working of the valve and thus compromise tyre safety, not least because it may result in possible pressure loss over a relatively short time.

So as to significantly reduce the inflation time, given that it is not possible to increase the section for the passage of air through the tyre check valve, it would be necessary to greatly increase the pressure of the filling gas (air, nitrogen or other inert gas), except for the fact that the limited energy available at the filling sites means it is not usually possible to obtain a sufficient pressure volume flow for the desired pressure. On the other hand, safety considerations rule out the use of a large, high capacity tank with a high internal pressure as the source of the compressed air upstream of the inflation system.

This document represents the most relevant State of the Art. JP- 07 127 571-A discloses a tyre inflation plant having a booster comprising a motor and a compressor driven by said motor for obtaining a relatively high flow and pressure from the booster.

The main object of the present invention is to provide an inflation plant that makes it possible to fill a tyre in very brief time without dismantling the tyre valve's internal mechanism.

Another object of this invention is to provide structurally very simple inflation equipment that is both high performance and low in its production cost.

These and other objects that will better appear below are achieved, according to the present invention, by a rapid tyre inflation equipment or plant as claimed in claim 1.

Further aspects and advantages of the present invention will better appear from the following detailed description of a presently preferred embodiment thereof, with reference to the accompanying drawings, in which:
Figure 1 shows a diagrammatic view of a first embodiment of the plant in accordance with the present invention; and
Figure 2 shows a block diagram illustrating a second embodiment of the present invention.

In the accompanying drawings the same or similar parts are indicated with the same reference numerals.

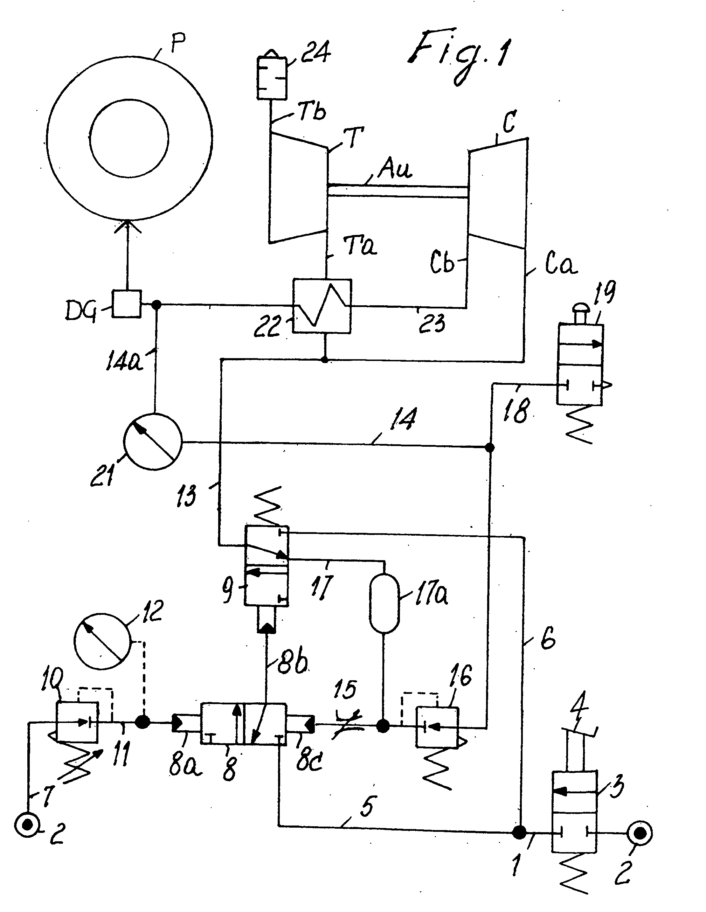

With reference first to the embodiment shown in Fig. 1, a rapid tyre control inflation equipment or plant, comprises a compressor C, a turbine T, an inflation device DG and a controlled tyre pressure transmission circuit CTP.

The controlled tyre pressure circuit CTP comprises a connection pipe 1, from an inflation gas source (generally indicated as 2, but not shown in detail in the drawings), of any suitable type, here a motor-driven compressor with a pressurised compressed air tank, has an open/close valve 3, preferably activated by a pedal 4. Two ducts 5 and 6 come out of the connection pipe, one to a pressure comparison valve 8 and the other to a switching valve 9.

The inflation gas source 2 is also directly connected by a duct 7 to a pressure reducer 10, whose output, via a pipe 11 with a manometer 12 setting the inflation pressure, is connected to a first input 8a of a pressure comparison valve 8, which is designed to control the switching valve 9, whose output 8b is for this reason connected to a control circuit (not shown in the drawings) of the switching valve 9. The pressure comparison valve 8 is arranged to control the switching valve 9, which is directly supplied by the source 2 through the duct 6, while, in its turn, this feeds along duct 13 both an input Ta to turbine T and an input Ca to the compressor C.

A second input 8c of pressure comparison valve 8, by way of a duct 14 along which are connected in series a constrictor 15 and a fixed non adjustable pressure reducer 16, is connected to a control manometer 21, as will be explained in further detail below. At its length comprised between the constrictor 15 and the pressure reducer 16, the duct 14 is in communication with the switching valve 9 by way of a pipe 17 with an interposed compensation tank 17a. In addition, from the duct 14 a duct 18 branches off which is in communication with a discharge valve 19, e.g. of a button type, whose working will be explained below.

Before the duct 13 reaches the input Ta to the turbine T, it has a coil section located in a heat exchanger 22 to absorb heat to preheat the compressed air from the source 2 before it enters the turbine T. The preheating heat is provided by a length of duct 23 connected to the output Cb of the compressor C and directed to the inflation device DG of a tyre P that is to be filled.

Downstream of the heat exchanger 22, the duct 23 by way of duct 14a is in fluid communication with to the control manometer 21 and then through duct 14, the pressure reducer 16 and the constrictor 15 and with an input 8c of the pressure comparison valve 8.

As is schematically indicated in Fig. 1, the output shaft Au of the turbine T is operatively directly connected to compressor C in order to activate this latter. The turbine T has a discharge output Tb, preferably fitted with a silencer 24.

The operation of the above described equipment is very simple and reliable.

Once the DG inflation device has been set up and connected to the usual inflation valve included with a tyre P, and the manometer 12 has been set at the desired pressure for the tyre type and performance rating, the operator steps on the pedal 4 to open valve 3 and connect both the turbine T and the compressor C to the compressed air source 2 that supplies air at relatively low pressure. The available flow in a normal compressed air source 2 in an inflation station is usually about 4000 Nℓ/min at about 10 bar.

The pressure comparison valve 8, on the one side, through its input 8a measures the preset inflation pressure through its own input while, on the other side, its input 8c measures the actual pressure during filling, i.e. that present in the tyre itself P. As long as there is an imbalance between the two pressures, i.e. that set for the manometer 12 and that reached in the tyre P, the pressure comparison valve 8 will keep the switching valve 9 open, and when this balance has been reached, with the preset pressure obtained, the switching valve is caused to be closed so the supply of compressed air is cut off both to the turbine T and to the compressor C.

In practice this balance is obtained gradually in successive stages and, to ensure the switching valve 9 stays closed until the set inflation pressure is reached, the tank 17a acts as a compensation reservoir to make the working of the valve both precise and sensitive.

As has already been indicated, a part of the air from the source 2 at about 10 bar is sent to the turbine T passing first through the heat exchanger 22, where it is preheated to increase the performance efficiency of the turbine T. The preheating heat is provided by the strongly compressed air, e.g. at 40 bar, coming from the compressor C, the temperature of the air having been markedly raised to as much as about as 150°C as a result of its being compressed.

The flow of compressed air from a typical inflation station is, as was stated earlier, about 4000 Nℓ min at 10 bar, while the flow that is required to obtain rapid inflation is of the order of 500 Nℓ/min at 40 bar. The energy balance between available power in an inflation station is therefore W = 4000 x 10 = 40,000 and that necessary for rapid inflation of W₁ = 500 × 40 = 20,000 is decidedly favourable to the solution created by the present invention.

The energy required to activate the compressor C is supplied by the turbine T that is fed with a part of the compressed air coming from the source 2, thus at the same pressure as that supplied to the compressor, thus having a compression factor of about 4.

The turbine T, like the compressor C, can be of any suitable type according to the needs of the job in hand. They may for example be dynamic axial or radial, action or reaction.

Once compressed air supplied by the compressor C has crossed the heat exchanger 22 it enters the tyre P directly through the control valve or inflation device DG. Given that the high pressure output line 23 from compressor C consists of a single pipe or duct with no intermediate shutoff devices except for the inflation valve DG, the inflation fluid under relatively high pressure flows unimpeded into pipe 23, thus allowing relatively large volumes of fluid to pass per unit of time enabling the time for the filling of the tyre P to be reduced.

Since the compressor P has sufficient capacity to obtain rapid inflation, it is not necessary to have any kind of reserve such as a tank, for the carrying out of the inflation process. As a result, when the inflation process has been completed no component is subject to high pressure, making the equipment very safe.

Apart from the inflating device DG that is activated by the operator, all the controls are low pressure commands and so have long term reliability.

Compressor C pressure and flow, given the fixed volume ratio between the compressor C and turbine T, are directly proportional to the air discharged from the turbine. It is sufficient therefore to adjust the turbine discharge into the atmosphere to vary, within a certain field of use, the power of the turbocompressor (multistage centrifugal blower) C, T and so obtain a specific inflation time set for a determined type or tyre P to be filled.

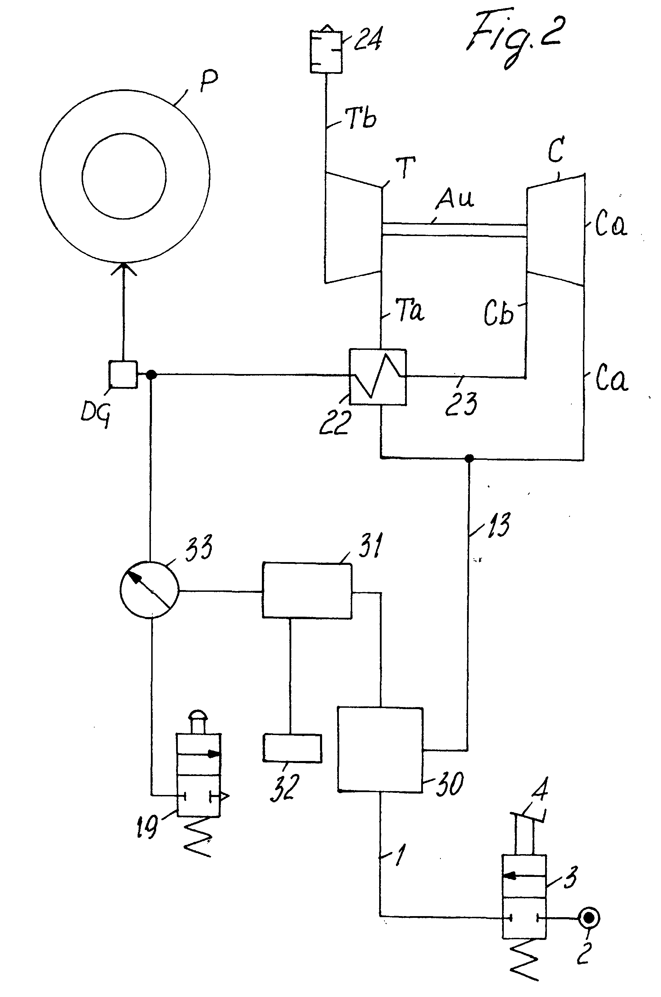

In the embodiment shown in Figure 2 the turbocompressor unit T, C is controlled by an electronic control circuit CCE comprising a power actuator 30 of any suitable kind, including a solenoid connected at its input to the supply pipe 1 while its output connects with duct 13. The power actuator 30 is controlled by an electronic control unit 31, that includes, as is normal in the art, a microprocessor, a microprocessor access keyboard 32 and a control manometer 33, this latter connected by a duct 34 with the output line 23 from the compressor C, to detect the actual inflating pressure.

The control unit 31 compares the actual inflating pressure and a preset maximum inflation pressure in the control unit's memory and locks the supply to line 13 when the actual inflating pressure reaches the preset value.

The whole inflation plant can be made of a suitable size and made suitably compact for mobile use or integrated with an inflation unit such as an inflation cage, a machine for the mounting and dismounting of tyres or similar devices and equipment.

The above described inflation plant may be modified in numerous ways to produce several variants within the ambit of the protection set forth in the claims that follow below.

## Claims

1. A rapid tyre inflation plant including an inflation device (DG), a low pressure high flow inflating gas source (2) comprising a motor driven compressor and an air tank, **characterized in that** it further comprises a turbine means (T), a second compressor means (C) arranged to be operated by said turbine means (T), and a control circuit (CTP, CCE) for controlled feed of low pressure inflating gas from said inflating gas source (2) to said second compressor means (C), for feed of inflating gas at a relatively large flow and low pressure from said inflating gas source (2) as input (Ta) to said turbine means (T), and for feed of inflating gas at a relatively high flow and pressure from said second compressor means (C) to said inflation device (DG).

2. A plant according to claim 1, **characterised in that** it comprises a heat exchanger (22) designed to intercept the supply of inflation gas to said turbine means (T) and the supply of compressed inflation gas coming from said second compressor means (C).

3. A plant according to claim 1 or 2, **characterised in that** said control circuit (CTP) comprises a comparator device (8; 31) designed to compare a preset threshold pressure with the actual inflating pressure and shut off the supply of inflation gas when the inflating pressure reaches a preset threshold pressure value.

4. A plant according to claim 3, **characterised in that** said comparator device comprises a three-input pressure comparing valve (8) and an output (8b) to communicate through a first input (5) with said inflation gas source (2), a switching valve (9) controlled by said comparing valve (8) and communicating with the output (8b) of said pressure comparing valve (8), a threshold-pressure presetting manometer (12) in fluid communication with a second input (8a) to said pressure comparing valve (8), and a manometer (21) that detects the pressure in a tyre (P) that is being inflated in controlled fluid communication with a third input (8c) to said pressure comparing valve (8).

5. A plant according to claim 4, **characterised in that** said manometer (21) measuring the pressure in a tyre (P) being inflated communicates with said third input (8c) of said pressure comparing valve (8) by way of a pressure reduced (16) and a constrictor (15) connected in series.

6. A plant according to claim 5, **characterised in that** it comprises a compensation tank (17a) connected between said reducer (16) and said constrictor (15) and said switching valve (9).

7. A plant according to claim 5 or 6, **characterised in that** it comprises an adjustable pressure reducer (10) between said inflation gas source (2) and said preset pressure threshold manometer (12).

8. A plant according to claim 1 or 2, **characterised in that** said control circuit (CCE) comprises a control unit (31) including a microprocessor, a microprocessor access keyboard (32), a control manometer (35) arranged to measure the pressure of the inflation gas at the compressor output (Cb), and a power actuator (30) that can be controlled by said control unit (31) and also having an electro-valve connected at its output with the input of said turbine means (T) and said second compressor (C), whereas at its first input it communicates with said inflation gas source (2).

9. A plant according to any claim 1 to 8, **characterised in that** it comprises a silencer (24) for the turbine output.

## Patentansprüche

1. Vorrichtung zum schnellen Aufpumpen von Reifen, die eine Aufpumpvorrichtung (DG) und eine Niederdruck-Aufpumpgasquelle (2) mit hohem Durchsatz, die ihrerseits einen motorgetriebenen Kompressor und einen Lufttank aufweist, umfasst, **dadurch gekennzeichnet, dass** sie ferner umfasst: ein Turbinenmittel (T), ein zweites Kompressormittel (C), das so beschaffen ist, dass es durch das Turbinenmittel (T) betrieben werden kann, sowie eine Steuerschaltung (CTP, CCE) für die gesteuerte Zufuhr von Niederdruck-Aufpumpgas von der Aufpumpgasquelle (2) zu dem zweiten Kompressormittel (C), für die Zufuhr von Aufpumpgas mit verhältnismäßig hohem Durchsatz und niedrigem Druck von der Aufpumpgasquelle (2) als Eingang (Ta) in das Turbinenmittel (T) und für die Zufuhr von Aufpumpgas mit verhältnismäßig hohem Durchsatz und verhältnismäßig hohem Druck von dem zweiten Kompressormittel (C) zu der Aufpumpvorrichtung (DG) .

2. Vorrichtung nach Anspruch 1, **dadurch gekennzeichnet, dass** sie einen Wärmetauscher (22) umfasst, der so beschaffen ist, dass er die Lieferung von Aufpumpgas an das Turbinenmittel (T) und die Lieferung von komprimiertem Aufpumpgas, das von dem zweiten Kompressormittel (C) kommt, unterbricht.

3. Vorrichtung nach Anspruch 1 oder 2, **dadurch gekennzeichnet, dass** die Steuerschaltung (CTP) eine Vergleichsvorrichtung (8; 3) umfasst, die so beschaffen ist, dass sie einen im Voraus festgelegten Schwellendruck mit dem Ist-Aufpumpdruck vergleicht und die Lieferung von Aufpumpgas unterbricht, wenn der Aufpumpdruck einen im Voraus festgelegten Schwellendruckwert erreicht.

4. Vorrichtung nach Anspruch 3, **dadurch gekennzeichnet, dass** die Vergleichsvorrichtung ein Druckvergleichsventil (8) mit drei Eingängen und einem Ausgang (8b), das über einen ersten Eingang (5) mit der Aufpumpgasquelle (2) in Verbindung steht, ein Schaltventil (9), das durch das Vergleichsventil (8) gesteuert wird und mit dem Ausgang (8b) des Druckvergleichsventils (8) in Verbindung steht, einen Schwellendruckvoreinstellungs-Druckmesser (12), der mit einem zweiten Eingang (8a) des Druckvergleichsventils (8) in einer Fluidverbindung steht, sowie einen Druckmesser (21), der den Druck in einem Reifen (8) erfasst, der in einer gesteuerten Fluidverbindung mit einem dritten Eingang (8c) des Druckvergleichsventils (8) aufgepumpt wird, umfasst.

5. Vorrichtung nach Anspruch 4, **dadurch gekennzeichnet, dass** der Druckmesser (21), der den Druck in einem Reifen (P), der momentan aufgepumpt wird, misst, mit dem dritten Eingang (8c) des Druckvergleichsventils (8) über einen Druckreduzierer (16) und eine Blende, die in Reihe verbunden sind, in Verbindung steht.

6. Vorrichtung nach Anspruch 5, **dadurch gekennzeichnet, dass** sie einen Ausgleichstank (17a) umfasst, der zwischen den Reduzierer (16), die Blende (15) und das Schaltventil (9) eingebaut ist.

7. Vorrichtung nach Anspruch 5 oder 6, **dadurch gekennzeichnet, dass** sie zwischen der Aufpumpgasquelle (2) und den Voreinstellungsdruckschwellenwert-Druckmesser (22) einen einstellbaren Druckreduzierer (10) umfasst.

8. Vorrichtung nach Anspruch 1 oder 2, **dadurch gekennzeichnet, dass** die Steuerschaltung (CCE) eine Steuereinheit (31) umfasst, die einen Mikroprozessor, eine Mikroprozessorzugriffstastatur (32), einen Steuerdruckmesser (33), der so beschaffen ist, dass er den Druck des Aufpumpgases am Kompressorausgang (Cb) misst, sowie einen Leistungsaktuator (30), der durch die Steuereinheit (31) gesteuert werden kann, und außerdem ein Elektroventil enthält, dessen Ausgang mit dem Eingang des Turbinenmittels (T) und des zweiten Kompressors (C) verbunden ist und dessen erster Eingang mit der Aufpumpgasquelle (2) in Verbindung steht.

9. Vorrichtung nach einem der Ansprüche 1 bis 8, **dadurch gekennzeichnet, dass** sie einen Schalldämpfer (24) für den Turbinenausgang umfasst.

## Revendications

1. Une installation de gonflage rapide de pneu comprenant un organe de gonflage (DG), une source de gaz de gonflage de débit élevé et de faible pression (2) comprenant un compresseur entraîné par un moteur et un réservoir d'air, **caractérisée en ce qu'**elle comprend en outre des moyens (T) formant turbine, des moyens (C) formant deuxième compresseur agencés pour être entraînés par lesdits moyens formant turbine (T), et un circuit de commande (CTP, CCE) pour l'alimentation commander d'un gaz de gonflage à faible pression à partir de ladite source de gaz de gonflage (2) vers lesdits moyens formant deuxième compresseur (C), pour l'alimentation d'un gaz de gonflage à un débit relativement élevé et à faible pression à partir de ladite source de gaz de gonflage (2) au niveau d'une entrée (Ta) desdits moyens formant turbine (T), et pour l'alimentation d'un gaz de gonflage à un débit et une pression relativement élevés à partir desdits moyens formant deuxième compresseur (C) vers ledit organe de gonflage (DG).

2. Une installation selon la revendication 1, **caractérisée en ce qu'**elle comprend un échangeur de chaleur (22) conçu pour intercepter l'alimentation en gaz de gonflage desdits moyens (T) formant turbine et l'alimentation en gaz de gonflage comprimé provenant desdits moyens (C) formant deuxième compresseur.

3. Une installation selon la revendication 1 ou 2, **caractérisée en ce que** ledit circuit de commande (CTP) comprend un élément comparateur (8;31) conçu pour comparer une pression de seuil prédéterminée avec la pression de gonflage effective et pour couper l'alimentation en gaz de gonflage lorsque la pression de gonflage atteint une valeur de pression de seuil prédéterminée.

4. Une installation selon la revendication 3, **caractérisée en ce que** ledit élément comparateur comprend une valve de comparaison de pression (8) à trois entrées et une sortie (8b) pour communiquer avec, une première entrée (5) avec ladite source de gaz de gonflage (2), une valve de commutation (9) commandée par ladite valve de comparaison (8) et en communication avec la sortie (8b) de ladite valve de comparaison de pression (8), un manomètre (12) avec réglage d'une pression de seuil en communication fluidique avec une deuxième entrée (8a) de ladite valve de comparaison de pression (8), et un manomètre (21) qui détecte la pression régnant dans un pneu (P) en cours de gonflage en communication fluidique commandée avec une troisième entrée (8c) de ladite valve de comparaison de pression (8).

5. Une installation selon la revendication 4, **caractérisée en ce que** ledit manomètre (21) mesurant la pression régnant dans un pneu (P) en cours de gonflage communique avec ladite troisième entrée (8c) de ladite valve de comparaison de pression (8) au moyen d'un moyen de diminution de pression (16) et d'un étranglement (15) reliés en série.

6. Une installation selon la revendication 5, **caractérisée en ce qu'**elle comprend un réservoir de compensation (17a) relié entre ledit organe de diminution (6) et ledit étranglement (15) et ladite valve de commutation (9).

7. Une installation selon la revendication 5 ou 6, **caractérisée en ce qu'**elle comprend un organe réglable de diminution de pression (10) entre ladite source de gaz de gonflage (2) et ledit manomètre à seuil de pression prédéterminée (12).

8. Une installation selon la revendication 1 ou 2, **caractérisée en ce que** ledit circuit de commande (CCE) comprend une unité de commande (31) qui comprend un microprocesseur, un clavier d'accès au microprocesseur (32), un manomètre de commande (55) agencé pour mesurer la pression du gaz de gonflage au niveau de la sortie du compresseur (Cb) et un organe d'actionnement (30) de puissance susceptible d'être commander par ladite unité de commande (31) et présentant également une électro-valve reliée par sa sortie à l'entrée desdits moyens formant turbine (T) et dudit deuxième compresseur (C), sa première entrée étant en communication avec ladite source de gaz de gonflage (2).

9. Une installation selon l'une des revendications 1 à 8, **caractérisée en ce qu'**elle comprend un silencieux (24) à la sortie de la turbine.
